# EUROPÄISCHE PATENTANMELDUNG

(11) **EP 1 319 496 A1**
(43) Veröffentlichungstag der Anmeldung: **18.06.2003**
(21) Anmeldenummer: 02027117.7
(22) Anmeldetag: 04.12.2002
(51) Int. Cl.: B29C 70/48, B29B 11/16, B29C 70/54

(54) **Verfahren zur Herstellung eines dreidimensional geformten Faserverbundkunststoffbauteils**

(30) Priorität: 15.12.2001 DE 10161773
(71) Anmelder: Bayerische Motoren Werke Aktiengesellschaft, 80809 München (DE)
(72) Erfinder: Wolf, Jürgen, 81675 München (DE); Reuter, Wolfram, 85748 Garching (DE)

(57) **Zusammenfassung**

Zur Herstellung von Faserverbundkunststoffbauteilen, die sich durch hohe Steifigkeit und Festigkeit bei geringem Gewicht auszeichnen, wird ein dreidimensional gewebtes Faserhalbzeug (1) zunächst in eine Fixierform (2) eingelegt und anschließend durch ein Fixiermittel (6) in seiner dreidimensionalen Form fixiert. Dadurch kann sich das Faserhalbzeug (1) während des weiteren Herstellvorgangs nicht mehr verformen. Somit wird eine hohe Maßhaltigkeit und Formtreue erreicht. Durch das erfindungsgemäße Verfahren kann die Herstellung des Faserverbundkunststoffbauteils auch in einer anderen Verarbeitungsstätte als beim Hersteller des Faserhalbzeuges (1) erfolgen.

## Beschreibung

Die Erfindung betrifft ein Verfahren zur Herstellung eines dreidimensional geformten Faserverbundkunststoffbauteils unter Verwendung eines dreidimensional gewebten Faserhalbzeuges.

Aus der EP 0 819 188 B1 ist ein Verfahren zum Weben eines dreidimensional geformten Faserhalbzeuges bekannt. Hierbei wird durch den gezielten Einsatz unterschiedlicher Bindungspunktdichten dem Faserhalbzeug eine dreidimensionale Form gegeben, die in sich formstabil ist. Im Unterschied zu ebenen Faserhalbzeugen, die in einem eigenen Herstellgang dreidimensional verformt werden müssen, ist bei der Verwendung der bekannten dreidimensional vorgeformten Faserhalbzeuge kein Umformprozess erforderlich. Die bekannten Faserhalbzeuge können zur Herstellung eines Faserverbundkunststoffbauteils mit der flüssigen Phase eines aushärtbaren Kunststoffs beschichtet und/oder getränkt werden, wie aus Anspruch 18 der EP 0 819 188 B1 hervorgeht.

Aufgabe der Erfindung ist es, ein Verfahren bereitzustellen, mit dem gattungsgemäße Faserverbundkunststoffbauteile unter Verwendung von dreidimensional geformten Faserhalbzeugen mit hoher Maßhaltigkeit hergestellt werden können, bei gleichzeitig einfachem Handling der Faserhalbzeuge.

Diese Aufgabe wird durch die Merkmale der Ansprüche 1, 2, 5, 6 oder 7 gelöst. Kerngedanke ist es hierbei jeweils, das Faserhalbzeug in eine Fixierform einzubringen und durch die Wirkung eines Fixiermittels die Fasern des Halbzeugs in ihrer Lage zueinander soweit zu fixieren, dass das Faserhalbzeug im weiteren Herstellprozess verarbeitet werden kann, ohne dass sich dessen Fasern gegeneinander verschieben können. Hieraus resultiert eine hohe Maßhaltigkeit und Formtreue des Faserhalbzeugs und damit auch des Faserverbundkunststoffbauteils. Die Erfindung wirkt sich insbesondere dann vorteilhaft aus, wenn nicht der Hersteller der Faserhalbzeuge das endgültige Faserverbundkunststoffbauteil fertigt, sondern das Faserhalbzeug zur weiteren Verarbeitung zu einer anderen Verarbeitungsstätte transportiert werden muss.

Das Fixiermittel kann vor oder nach dem Ablegen des Faserhalbzeugs in der Fixierform aufgebracht werden.

Das Fixiermittel kann dabei in flüssiger oder pulverförmiger Form vorliegen und wird mit einem geeigneten Werkzeug, wie beispielsweise einer Sprühpistole oder einer Bestreuvorrichtung, auf das Faserhalbzeug aufgebracht.

Nach einer weiteren Ausführung der Erfindung kann das Fixiermittel bereits in die Fasern des Faserhalbzeugs eingearbeitet sein, beispielsweise durch Beimengung von Fixiermittel unmittelbar in die Fasern oder durch in das Faserhalbzeug eingebrachte zusätzliche Fasern aus einem thermoplastischen Fixiermittel, die nachfolgend aufgeschmolzen werden.

Alternativ kann das Faserhalbzeug zum Aufbringen des Fixiermittels in ein Fixiermittel-Bad eingetaucht werden. Dabei ist es auch möglich, das Faserhalbzeug zusammen mit der Fixierform in das Bad einzubringen, wofür sich insbesondere Fixierformen aus einem lochblechartigen Material eignen.

Die Fixierform bildet exakt die Form des Faserhalbzeugs nach und kann als Positivform oder als Negativform ausgebildet sein.

Zum Erreichen einer gleichmäßigen Anlage des Faserhalbzeuges in der Fixierform werden vorteilhafterweise zusätzliche Maßnahmen getroffen, wie beispielsweise das Ansaugen des Faserhalbzeuges durch Unterdruck, das Andrücken durch einen der Bauteilform entsprechenden Positionierstempel oder das Andrücken des Faserhalbzeuges an die Fixierform von Hand, gegebenenfalls unter Zuhilfenahme eines Werkzeugs.

Durch das Einbringen oder Aufbringen eines duroplastischen, thermoplastischen oder elastomeren Fixiermittels auf das Faserhalbzeug wird das in der Fixierform abgelegte Faserhalbzeug in sich stabilisiert, so dass beim weiteren Handling die einzelnen Fasern sich gegeneinander weder verziehen noch verschieben können.

Die Trocknung und Aushärtung eines flüssigen Fixiermittels kann selbständig erfolgen oder durch Einwirkung von Wärme beschleunigt werden. Hierbei kann die Fixierform selbst erwärmt werden. Alternativ oder zusätzlich ist eine Bestrahlung, beispielsweise mit Infrarot-, UV- oder Mikrowellenstrahlung, möglich.

Pulverförmige thermoplastische Fixiermittel werden aufgeschmolzen und fixieren nach dem Erstarren das Faserhalbzeug. Duroplastische Pulversysteme härten aus und fixieren das Faserhalbzeug nach dem Erstarren in gleicher Weise.

In einer vorteilhaften Weiterbildung des Verfahrens wird das Faserhalbzeug vor oder bevorzugt nach dem Fixieren in seinen Randbereichen beschnitten. Hierbei kann zunächst lediglich ein Grobbeschnitt vorgenommen werden, der nach der Herstellung des Faserverbundkunststoffbauteils einen weiteren Beschneidevorgang erfordert. Alternativ ist ein Feinbeschnitt des Faserhalbzeugs möglich, so dass nach der Herstellung des Faserverbundkunststoffbauteils lediglich ein Entgraten der Randbereiche erforderlich ist.

Der Beschnitt kann mit jeder geeigneten Beschnitt- oder Stanzvorrichtung erfolgen, beispielsweise mit einem Messer, einer Schere, einem Stanzrahmen etc. In einer vorteilhaften Ausgestaltung des erfindungsgemäßen Verfahrens dient die Fixierform selbst als Lehre für die Beschnitt- oder Stanzvorrichtung.

Nach einer besonders vorteilhaften Weiterbildung des erfindungsgemäßen Verfahrens werden durch das Einlegen des fixierten Faserhalbzeuges in eine Transportvorrichtung Beschädigungen des Faserhalbzeuges während der Verlagerung vermieden. Dies ist insbesondere dann von Vorteil, wenn die Weiterverarbeitung des Faserhalbzeuges nicht beim Hersteller desselben erfolgt, sondern das Faserhalbzeug in eine andere Verarbeitungsstätte überführt werden muss. Hierbei wird das Faserwerkzeug auf eine Transportvorrichtung in Form eines Rahmens, beispielsweise aus Styropor, aufgebracht. Alternativ kann auch die oben beschriebene Fixierform verwendet werden, ebenso wie ein Werkzeug, mit dem das Faserhaibzeug nachfolgend konfektioniert wird. Weitergehender Schutz gegen Beschädigung und Verschmutzung wird durch eine Verpackung des auf die Transportvorrichtung aufgelegten Faserhalbzeugs erreicht.

Zur Herstellung des Faserverbundkunststoffbauteils wird das Faserhalbzeug in an sich bekannter Weise mit einem duroplastischen oder thermoplastischen Kunststoffmaterial getränkt, ummantelt, etc. Hierdurch wird die gewünschte Steifigkeit und Festigkeit des Bauteils erreicht, gegebenenfalls auch die endgültige Oberflächenqualität. Hierfür eignen sich zahlreiche bekannte Verfahren zur Herstellung von Faserverbundkunststoffbauteilen.

Beispielsweise kann das Faserhalbzeug in einem als Negativform ausgebildeten Werkzeug abgelegt und anschließend mit einem duroplastischen Matrixmaterial imprägniert werden. Alle bekannten Arten eines Druckaufbaus auf das Laminat, beispielsweise durch einen Vakuumsack, einen Druckstempel, beispielsweise aus Silikon oder als Airpad ausgebildet, sind denkbar. Die Aushärtung des Faserverbundbauteils kann mit oder ohne Autoklaven erfolgen.

Die Herstellung des Faserverbundbauteils kann auch im RTM-Verfahren (resin transfer molding) oder einem verwandten Verfahren erfolgen, indem in die Kavität zwischen einer Ober- und einer Unterschale, in die das Faserhalbzeug eingelegt ist, harzförmiges Matrixmaterial eingespritzt wird.

Des weiteren kann das Faserverbundkunststoffbauteil durch Imprägnieren des Faserhalbzeuges mit einem Thermoplastmaterial und anschließendes Verpressen dieses Materialverbundes hergestellt werden. Anstelle des nachträglichen Imprägnierens kann das thermoplastische Matrixmaterial bereits in Faserform in das Faserhalbzeug eingearbeitet sein. Eine Möglichkeit ist hierbei eine Ummantelung des Faserhalbzeuges mit dem thermoplastischen Matrixmaterial. Alternativ kann das Faserhalbzeug neben den Gewebefasern auch thermoplastische Kunststofffasern aufweisen, die unter Wärmeeinbringung bei der Konfektionierung zum endgültigen Faserverbundkunststoffbauteil verpresst werden. Des weiteren ist es möglich, auf das Faserhalbzeug ein formgleiches Halbzeug aus Thermoplastmaterial aufzulegen und die beiden Bauteile miteinander zu verpressen.

Nach der Entnahme des ausgehärteten Faserverbundkunststoffbauteils aus dem Werkzeug wird das Bauteil gereinigt und einer Nacharbeitung unterzogen. In der Regel ist ein Beschneiden oder Befräsen des Bauteils entsprechend der gewünschten Bauteilgeometrie erforderlich, insbesondere in den Randbereichen. Außerdem können Inserts eingebracht werden, so weit dies nicht schon während des Konfektionierens im Werkzeug erfolgt ist. Für die positionsgerechte Einbringung dieser Inserts sind Positionierlehren vorzusehen.

Das erfindungsgemäße Verfahren eignet sich grundsätzlich zur Herstellung solcher Bauteile, bei denen die Anforderungen hoher Festigkeit und Steifigkeit bei sehr geringem Gewicht zu realisieren sind. Insbesondere im Flugzeugbau sowie im Rennsport haben vor allem kohlefaserverstärkte Bauteile ein weites Anwendungsfeld erschlossen und die klassischen metallischen Werkstoffe (Aluminium, Stahl) verdrängt. Durch die Verwendung dreidimensional vorgeformter Faserhalbzeuge können auch Bauteile mit komplizierter Geometrie maßgenau und mit gleichmäßig hoher Festigkeit und Steifigkeit hergestellt werden. Zudem kann die Kohlefaserstruktur als Designmerkmal für die Oberfläche der Bauteile bewusst eingesetzt werden.

Das erfindungsgemäße Verfahren eignet sich für die Serienproduktion von Bauteilen.

Eine mögliche Anwendung des erfindungsgemäßen Verfahrens liegt in der Herstellung von Bauteilen für die Innenausstattung von Kraftfahrzeugen, insbesondere von sportlich ausgelegten Fahrzeugen. Mögliche Bauteile sind beispielsweise Mittelkonsolen, Tür- und Seitenverkleidungen, Schalensitze ("Rennschalen"), Abdeckungen, Blenden etc., aber auch großflächige Bauteile wie zum Beispiel eine gesamte Bodengruppe eines Kraftfahrzeugs Spritzwand, Trennwand, Radhaus, Gepäckraumboden etc.

Selbstverständlich können nach dem erfindungsgemäßen Verfahren auch Außenhautbauteile von Fahrzeugen hergestellt werden, wie zum Beispiel Seitenwände, Türen, Front- oder Heckklappe etc.

Selbstverständlich können für die erfindungsgemäßen Verfahren auch dreidimensional vorgeformter Faserhalbzeuge verwendet werden, die durch andere Verfahren als durch ein Webverfahren hergestellt sind.

Das Herstellverfahren ist beispielhaft in der Zeichnung dargestellt und wird nachfolgend näher erläutert. Es zeigt:
- Fig. 1: eine Fixierform für ein dreidimensionales Faserhalbzeug in perspektivischer Darstellung,
- Fig. 2: eine der Fig. 1 entsprechende Darstellung, mit einer Sprühpistole zum Auftrag des Fixiermittels,
- Fig. 3: eine der Fig. 1 entsprechende Darstellung, mit einer Bestreuvorrichtung zum Auftrag des Fixiermittels,
- Fig. 4: eine der Fig. 1 entsprechende Darstellung, mit einer Vorrichtung zur Erwärmung des Faserhalbzeugs,
- Fig. 5: eine der Fig. 1 entsprechende Darstellung, mit einer Beschnittvorrichtung und
- Fig. 6: eine der Fig. 1 entsprechende Darstellung, mit einem dreidimensionalen Faserhalbzeug nach dem Beschnitt.

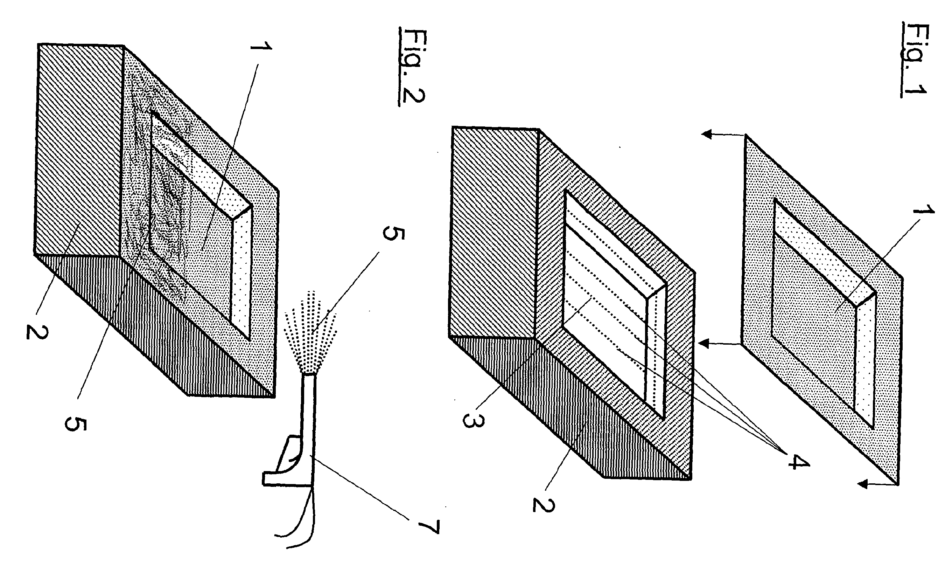

Fig. 1 zeigt ein Faserhalbzeug 1, das seine dreidimensionale Form durch ein Webverfahren erhalten hat. Das Faserhalbzeug 1 ist auf Grund seiner textilen Struktur in sich verhältnismäßig formstabil. Beim Handling des Faserhalbzeugs 1 im Verlauf der weiteren Verarbeitung kommt es jedoch zu Maßabweichungen, da sich die Fasern des Faserhalbzeugs 1 begrenzt gegeneinander verschieben können. Gerade beim Transport über weite Entfernungen in eine räumlich getrennte Verarbeitungsstätte sind auch größere Verformungen durch äußere Krafteinwirkung nicht auszuschließen.

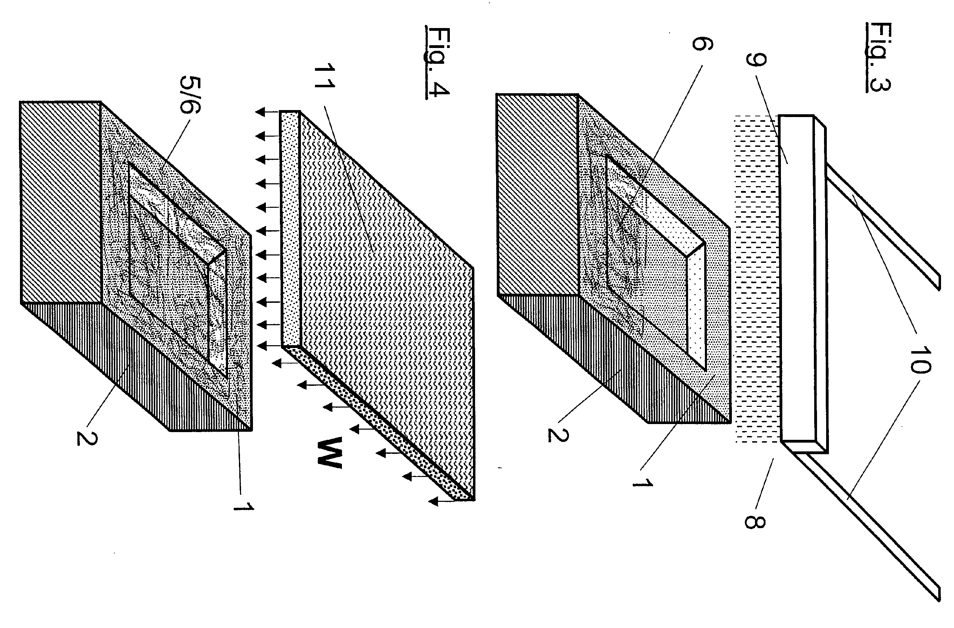

Zur Erhöhung der Formstabilität für den weiteren Verarbeitungsprozess oder für den Transport wird das Faserhalbzeug 1 erfindungsgemäß einem Fixierungsprozess unterzogen. Hierzu wird das Faserhalbzeug 1 in eine Fixierform 2 eingelegt, die im vorliegenden Ausführungsbeispiel als Negativform ausgeführt ist. Die Fixierform 2 weist eine Vielzahl von Öffnungen 3 auf, die beispielsweise entlang gerader Linien 4 angeordnet sind. Über die Öffnungen 3 wird Unterdruck aufgebracht, durch den das Faserhalbzeug 1 an die Innenflächen der Fixierform 2 angesaugt wird. Anschließend erfolgt der Auftrag eines flüssigen oder pulverförmigen Fixiermittels 5 bzw. 6, wie in den Fig. 2 und 3 dargestellt.

Gemäß Fig. 2 wird das flüssige Fixiermittel 5 über eine Sprühpistole 7 auf das in der Fixierform abgelegte Faserhalbzeug 1 von Hand oder automatisiert aufgetragen. Das Fixiermittel 5 ist beispielsweise ein duroplastischer Binder auf Epoxid-Basis. Das Material und die aufzutragende Menge des Binders 5 müssen auf den Fasertyp und die verwendete Matrix des Faserhalbzeugs 1 abgestimmt werden. Als Binder 5 kommen beispielsweise die Materialien mit den Handelsnamen M1 (Fa. Backelite) oder Vimex M81 (Fa. Wacker) oder Materialien der Fa. Vantico in Frage.

Pulverförmige Fixiermittel 6 werden gemäß Fig. 3 über eine Bestreuvorrichtung 8 auf das Faserhalbzeug 1 aufgebracht. Die Bestreuvorrichtung 8 weist einen balkenförmigen Streukopf 9 auf, der sich über die gesamte Breite des Faserhalbzeugs 1 erstreckt und entlang von Schienen 10 über die Längserstreckung des Faserhalbzeugs 1 bewegt wird. Während dieser Bewegung tritt aus dem Streukopf 9 das Fixiermittel 6 aus und legt sich auf dem Faserhalbzeug 1 ab. Das Fixiermittel 6 ist beispielsweise ein thermoplastischer Binder auf Polyesterbasis. Das Material und die aufzutragende Menge des Binders 6 muss auf den Fasertyp und die verwendete Matrix des Faserhalbzeugs 1 abgestimmt werden.

Zur Beschleunigung des Trocknens flüssiger Fixiermittel 5 bzw. zum Aufschmelzen pulverförmiger Fixiermittel 6 wird das Faserhalbzeug 1 nach dem Auftrag des Fixiermittels 5 bzw. 6 erwärmt. Beispielhaft ist in Fig. 4 ein externes Heizfeld 11 dargestellt, das oberhalb der Fixierform 2 angeordnet ist und durch Wärmestrahlung W auf das Faserhalbzeug 1 einwirkt.

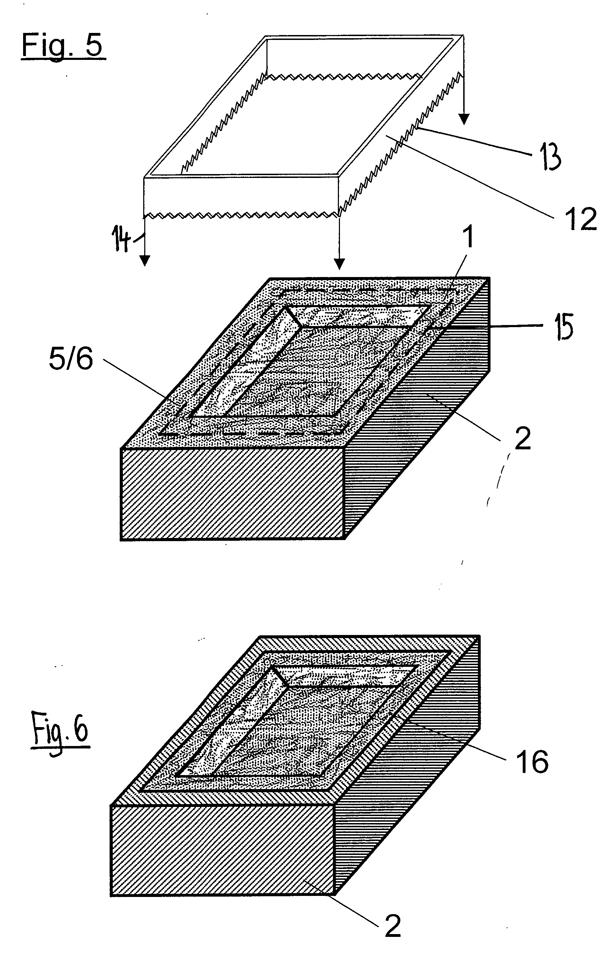

Fig. 5 zeigt eine Beschnittvorrichtung 12 zum Beschneiden eines bereits fixierten dreidimensionalen Faserhalbzeugs 1. Die Beschnittvorrichtung 12 weist an ihrer der Fixierform 2 zugewandten Unterseite sägezahnförmige Schneidkanten 13 auf und wird entsprechend den Pfeilen 14 auf die Fixierform 2 abgesenkt, bis die Schneidkanten 13 in eine als Lehre dienende, umlaufende, mit strichlierten Linien dargestellte Nut 15 eingreifen und hierbei das Faserhalbzeug 1 durchtrennen. Fig. 6 zeigt das fixierte Faserhalbzeug 1 nach dem Beschnitt, mit einem gleichmäßig beschnittenen Rand 16.

## Patentansprüche

1. Verfahren zur Herstellung eines dreidimensional geformten Faserverbundkunststoffbauteils unter Verwendung eines dreidimensional gewebten Faserhalbzeuges,
**dadurch gekennzeichnet, dass** das Faserhalbzeug (1) zunächst auf einer Fixierform (2) abgelegt und anschließend durch Aufbringen eines Fixiermittel (5, 6) in seiner Form so fixiert wird, dass das Faserhalbzeug (1) beim weiteren Handling und/oder Transport seine Form beibehält.

2. Verfahren zur Herstellung eines dreidimensional geformten Faserverbundkunststoffbauteils unter Verwendung eines dreidimensional gewebten Faserhalbzeuges,
**dadurch gekennzeichnet, dass** auf das Faserhalbzeug (1) zunächst ein Fixiermittel (5, 6) aufgebracht wird und das Faserhalbzeug (1) anschließend auf einer Fixierform (2) abgelegt und in seiner Form so fixiert wird, dass das Faserhalbzeug (1) beim weiteren Handling und/oder Transport seine Form beibehält.

3. Verfahren nach Anspruch 1 oder 2,
**dadurch gekennzeichnet, dass** das Fixiermittel (5) in flüssiger Form mit einer Sprühpistole (7) oder dergleichen auf das Faserhalbzeug (1) aufgebracht wird.

4. Verfahren nach Anspruch 1 oder 2,
**dadurch gekennzeichnet, dass** das Fixiermittel (6) in pulverförmiger Form mit einer Bestreuvorrichtung (8) oder dergleichen auf das Faserhalbzeug (1) aufgebracht wird.

5. Verfahren zur Herstellung eines dreidimensional geformten Faserverbundkunststoffbauteils unter Verwendung eines dreidimensional gewebten Faserhalbzeuges,
**dadurch gekennzeichnet, dass** das Faserhalbzeug (1) ein zunächst nicht aktiviertes Fixiermittel enthält, das Faserhalbzeug (1) auf einer Fixierform (2) abgelegt und anschließend durch Aktivieren des Fixiermittels in seiner Form so fixiert wird, dass das Faserhalbzeug (1) beim weiteren Handling und/oder Transport seine Form beibehält.

6. Verfahren zur Herstellung eines dreidimensional geformten Faserverbundkunststoffbauteils unter Verwendung eines dreidimensional gewebten Faserhalbzeuges,
**dadurch gekennzeichnet, dass** das Faserhalbzeug (1) zunächst in ein flüssiges Fixiermittel eingetaucht, danach auf einer Fixierform (2) abgelegt und anschließend durch das Fixiermittel in seiner Form so fixiert wird, so dass das Faserhalbzeug (1) beim weiteren Handling und/oder Transport seine Form beibehält.

7. Verfahren zur Herstellung eines dreidimensional geformten Faserverbundkunststoffbauteils unter Verwendung eines dreidimensional gewebten Faserhalbzeuges,
**dadurch gekennzeichnet, dass** das Faserhalbzeug (1) zunächst auf einer Fixierform abgelegt und danach zusammen mit der Fixierform in ein flüssiges Fixiermittel eingetaucht wird, wobei das Faserhalbzeug (1) anschließend durch das Fixiermittel in seiner Form so fixiert wird, dass das Faserhalbzeug (1) beim weiteren Handling und/oder Transport seine Form beibehält.

8. Verfahren nach einem der vorgenannten Ansprüche,
**dadurch gekennzeichnet, dass** das Faserhalbzeug (1) durch Aufbringen von Unterdruck an die Fixierform (2) angesaugt wird.

9. Verfahren nach einem der vorgenannten Ansprüche,
**dadurch gekennzeichnet, dass** das Faserhalbzeug (1) mit einem Stempel an die Fixierform (2) angedrückt wird.

10. Verfahren nach einem der vorgenannten Ansprüche,
**dadurch gekennzeichnet, dass** das Faserhalbzeug (1) von Hand an die Fixierform (2) angedrückt wird.

11. Verfahren nach einem der vorgenannten Ansprüche,
**dadurch gekennzeichnet, dass** die Aushärtung bzw. das Aufschmelzen des Fixiermittels (5, 6) durch Erwärmung der Fixierform (2) erwirkt oder beschleunigt wird.

12. Verfahren nach einem der vorgenannten Ansprüche,
**dadurch gekennzeichnet, dass** die Aushärtung bzw. das Aufschmelzen des Fixiermittels (5, 6) durch Bestrahlung des Faserhalbzeugs (1) erwirkt oder beschleunigt wird.

13. Verfahren nach einem der vorgenannten Ansprüche,
**dadurch gekennzeichnet, dass** das Faserhalbzeug (1) nach dem Fixieren in seinen Randbereichen mit einer Beschnitt- oder Stanzvorrichtung beschnitten wird.

14. Verfahren nach einem der vorgenannten Ansprüche,
**dadurch gekennzeichnet, dass** das Faserhalbzeug (1) vor dem Fixieren in seinen Randbereichen mit einer Beschnitt- oder Stanzvorrichtung beschnitten wird.

15. Verfahren nach Anspruch 13 oder 14,
**dadurch gekennzeichnet, dass** der Beschnitt so exakt erfolgt, dass am fertig hergestellten Faserverbundkunststoffbauteil lediglich eine Feinbearbeitung der Randbereiche erforderlich ist.

16. Verfahren nach einem der Ansprüche 13 bis 15,
**dadurch gekennzeichnet, dass** der Beschnitt mit einer Schere, einem Messer oder dergleichen erfolgt.

17. Verfahren nach einem der Ansprüche 13 bis 15,
**dadurch gekennzeichnet, dass** der Beschnitt mit einem Stanzrahmen erfolgt.

18. Verfahren nach einem der vorgenannten Ansprüche ,
**dadurch gekennzeichnet, dass** die Fixierform (2) als Lehre für den Beschnitt bzw. als Teil des Stanzrahmens dient.

19. Verfahren nach einem der vorgenannten Ansprüche,
**dadurch gekennzeichnet, dass** das Faserhalbzeug (1) nach dem Fixieren in eine Transportvorrichtung eingelegt wird.

20. Verfahren nach Anspruch 19,
**dadurch gekennzeichnet, dass** die Transportvorrichtung von der Fixierform (2) gebildet wird.

21. Verfahren nach einem der vorgenannten Ansprüche,
**dadurch gekennzeichnet, dass** das fixierte Faserhalbzeug (1) in ein Werkzeug eingelegt und mit einem Matrixmaterial versehen wird.

22. Verfahren nach einem der vorgenannten Ansprüche,
**dadurch gekennzeichnet, dass** ein Bauteil für ein Kraftfahrzeug hergestellt wird.

23. Verfahren nach Anspruch 22,
**dadurch gekennzeichnet, dass** eine Mittelkonsole für ein Kraftfahrzeug hergestellt wird.
